# EUROPEAN PATENT SPECIFICATION

(11) **EP 3 616 773 B1**
(45) Date of publication and mention of the grant of the patent: **30.06.2021**
(21) Application number: 19175545.3
(22) Date of filing: 21.05.2019
(51) Int. Cl.: B01D 53/06, B01D 53/26, F24F 3/14, F24F 1/0071, F24F 1/0083, F24F 8/117

(54) **A HONEYCOMB ADSORPTION OBJECT AND A DEHUMIDIFICATION AIR CONDITIONER USING IT**
WABENFÖRMIGES ADSORPTIONSOBJEKT UND ENTFEUCHTUNGSKLIMAANLAGE MIT VERWENDUNG DAVON
OBJET D'ADSORPTION EN NID D'ABEILLE ET CLIMATISEUR DE DÉSHUMIDIFICATION L'UTILISANT

(30) Priority: 28.08.2018 JP 2018158811
(43) Date of publication of application: 04.03.2020
(73) Proprietor: Seibu Giken Co., Ltd., Koga-shi, Fukuoka 811-3134 (JP)
(72) Inventor: INOUE, Koji, Koga-shi,, Fukuoka 811-3134 (JP); FURUKI, Keimei, Koga-shi,, Fukuoka 811-3134 (JP); KURODA, Ayako, Koga-shi,, Fukuoka 811-3134 (JP)
(74) Representative: TBK

(56) References cited:
- WO-A1-2010/100739
- WO-A1-2017/126149
- JP-A- 2014 097 437
- TW-A- 201 115 083
- US-A- 5 753 345

## Description

### [Field of the Invention]

The present invention relates to a dehumidification air conditioner suitable for a manufacture plant of a lithium ion battery.

### [Background of the Invention]

If the manufacture plant of a lithium ion battery does not dehumidify, it will produce a problem in the quality of a lithium ion battery. That is, since lithium reacts to moisture strongly, the manufacture plant of a lithium ion battery needs to set the dew point to minus 30 degrees Celsius or less (hereinafter all temperature are "degrees Celsius ").

By the nickel series anode material of a lithium ion battery adsorbing water and carbon dioxide, and forming the lithium ion and lithium compound which were eluted from the inside of anode material, degradation of an electrode occurs and it is explained that the charge cycling characteristics of a battery worsen.

Thus, in order to make the conditions of the low dew point with low carbon dioxide levels, there is a means to make liquid nitrogen evaporate and to replace the air in a plant by nitrogen. In this method, since oxygen is lost indoors, there is a problem of it becoming impossible for people to enter.

Then, although the means using the adsorption-type dehumidification air conditioner which used moisture adsorbent for making low dew point environment is realistic and many plants use this means, there is a problem that it is difficult to make carbon dioxide levels low.

Then, there exists patent document 1 as a technique which makes a low dew point environment where carbon dioxide levels are low. The technology disclosed in patent documents 1 is a technology which performs indoor dew point control with sufficient accuracy, and can also make carbon dioxide levels low. However, carbon dioxide adsorbent, such as sodium hydroxide, was used for this art, and when carbon dioxide adsorption capability declined in connection with movable time, it needed to exchange it for new carbon dioxide adsorbent.

Moreover, there exists patent document 2 as a technique which solves the problem of carbon dioxide adsorbent exchange of patent document 1. The technique disclosed by patent document 2 controls the indoor dew point and carbon dioxide levels by controlling the number of rotations of the rotor using moisture and a carbon dioxide adsorption rotor.

The art disclosed by patent document 3 is suitable for the room where indoor capacity is comparatively bigger than the glove box of patent document 1 or patent document 2 and the like, and this art makes the carbon dioxide levels low in the low humidity workroom of a size which can be worked by people going into inside. Therefore, the dehumidification air conditioner provided with the carbon dioxide adsorption rotor and the moisture adsorption rotor is used.

### [Prior art document]

### [Patent documents]

[Patent document 1] JP 2014-97437 A
[Patent document 2] JP 2016-2519 A
[Patent document 3] Japanese Patent Application Publication No. 2017-139547

WO 2017/126149 A1 relates to a carbon dioxide separation/recovery device provided with a carbon dioxide trapping unit that comprises a carbon dioxide scavenger, wherein the carbon dioxide trapping unit comprises: a gas inlet for introducing the gas to be processed; a heating unit for heating a scavenger heating gas to a predetermined temperature, said scavenger heating gas being used when carbon dioxide trapped by the carbon dioxide scavenger is separated therefrom; a cooling gas feed port for introducing a scavenger cooling gas that is used when the carbon dioxide scavenger is cooled; and a moisture mixing part for adding moisture to a nitrogen oxide separation gas that is used when nitrogen oxides are separated from the carbon dioxide scavenger.

### [Summary of the Invention]

### [Problem(s) to be Solved by the Invention]

As mentioned above, what was indicated by patent document 1 and patent document 2 makes a low dew point environment which made indoor carbon dioxide levels low, but in both cases the indoor capacity uses about 1-3 m³ and a comparatively small glove box. It is equipped with the glove made of rubber so that the hygroscopic surface moisture to which such a glove box comes out of people's hand may not go indoors. Therefore, there was a problem of being inapplicable in a low humidity workroom like a dry room, in which people work entering indoors like the manufacture plant of a lithium ion battery.

The art indicated by patent document 3 makes low the carbon dioxide levels of a low humidity workroom like a dry room in which people work going indoors. However, since the dehumidification air conditioner which carries two kinds of rotors, a carbon dioxide adsorption rotor and a moisture adsorption rotor, was used, as compared with the dehumidifier system given in patent document 1 and patent document 2 which carry one kind of rotor, the device became large and the initial cost also had the problem of becoming high.

The present invention has been made to solve the above-mentioned problems and is a dehumidifier system which carries a rotor which can remove moisture and carbon dioxide simultaneously, which has a comparatively large indoor capacity and being a dry room which can be worked by people going into inside. An object of the present invention is to provide the dehumidification air conditioner which can make low concentration of the carbon dioxide in a low humidity workroom.

### [Means for Solving the Problem]

The present invention has a pre air cooler which cools the outdoor air, and branches in a part of air by which cooling dehumidification was carried out by the pre air cooler, and it lets it pass to the adsorption zone of the adsorption rotor which can remove moisture and carbon dioxide simultaneously. It lets a part of remaining air cooled by the pre air cooler pass in the purge zone of the adsorption rotor which can remove moisture and carbon dioxide simultaneously. The main features of the present invention are supplying indoors the air which became low moisture and low carbon dioxide levels.

### [Effect of the Invention]

One set of the adsorption rotor which can remove carbon dioxide and moisture simultaneously is used for the dehumidification air conditioner of the present invention. The device of the present invention can lower the dew point temperature in drying rooms, such as a dry room, and also can also lower carbon dioxide levels.

It became possible to provide the device in the one path which cannot do the return of the air to the dehumidification air conditioner from a dry room.

### [Brief Description of the Drawings]

[Figure 1] Figure 1 is a flow figure showing Example 1 of the dehumidifier of the present invention.
[Figure 2] Figure 2 shows the graph of a carbon dioxide extraction ratio to the rotor number of rotations at the time of changing the amount ratio of winds of each zone of a rotor.
[Figure 3] Figure 3 shows the graph of processing exit dew point temperature to the rotor number of rotations at the time of changing the amount ratio of winds of each zone of a rotor.

### [Mode for carrying out the invention]

The present invention supplied indoors the air which passed through the adsorption zone of the adsorption rotor which can remove carbon dioxide and moisture simultaneously, and became low humidity with low carbon dioxide levels, and it realized the object of providing the dehumidification air conditioner which makes the carbon dioxide levels of supply air low, and it makes into the low dew point.

### [Example 1]

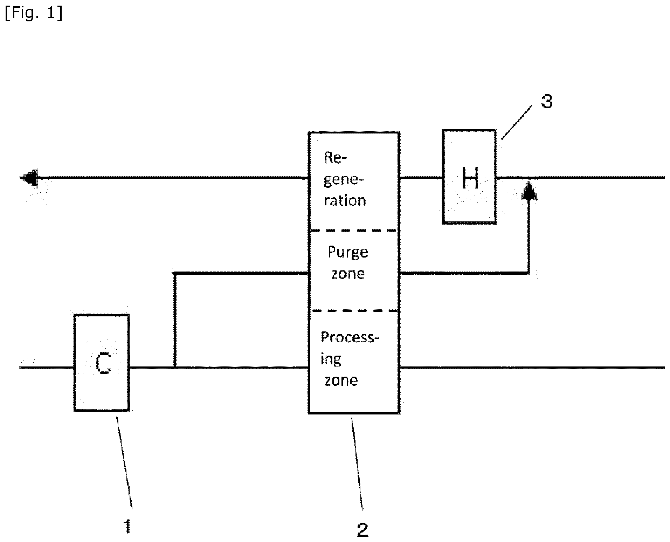

Hereinafter, it explains along Figure 1 showing the flow of Example 1 of the present invention. Out door air OA is cleaned from dust by the air filter (not shown). This outdoor air is cooled by pre air cooler 1, and dehumidification by dew condensation is performed. After the air which came out of pre air cooler 1 branches on two ways, and a part of the air is adjusted by a damper or the like to pass through the processing zone (adsorption zone) of the adsorption rotor 2 which can remove removing carbon dioxide and moisture simultaneously. A purge zone lets the remaining branched air pass.

Adsorption rotor 2 which can remove carbon dioxide and moisture simultaneously is manufactured using the following materials so that it may not have influence of humidity to the adsorption performance of carbon dioxide. Adsorption rotor 2 carries out corrugated (wave attachment) processing of the nonflammable sheet of glass fiber paper, ceramic textiles paper, living body solubility inorganic fiber paper, etc., and it is wound in the shape of a rotor and it processes it. Even if the sheet which constitutes a rotor has moisture using an inorganic system binder etc., the carbon dioxide capture material etc. which consist of the potassium carbonate, sodium carbonate, an ionic liquid, and an oxide of Ce or Zr are supported, which can adsorb carbon dioxide. The adsorption rotor 2 which can remove carbon dioxide and moisture simultaneously is divided into three, a processing zone, a purge zone, and a regeneration zone. The adsorption rotor 2 which can remove carbon dioxide and moisture simultaneously is rotated by the motor (not shown) etc. which were slowed down with the gear.

Here, an example of the manufacturing method of adsorption rotor 2 with the capability for carbon dioxide and moisture to be simultaneously removable is shown below. The powder adsorbent (hereinafter "Ce oxide adsorbent") which consists of an oxide of Ce is used for the honeycomb adsorbent as carbon dioxide supplementary material. The honeycomb adsorbent of Ce oxide is produced by, for example, impregnating a honeycomb adsorbent with a slurry containing Ce oxide adsorbent, a binder, and water, and drying. The average secondary particle diameter of the Ce oxide adsorbent is 0.5 to 20 µm (measured with a scanning electron microscope, or laser diffraction and the diameter distribution measuring device of a dispersion type particle). With 0.5 µm or more, the viscosity of the slurry was which becomes the viscosity in which dipping process on a honeycomb adsorbent is possible depending on the diameter of a particle. When dipping processing is carried out at a honeycomb adsorbent, it is 20 µm which is the greatest diameter of a secondary particle that powder omission does not produce. The size of a honeycomb affects the fluid resistance of the air which passes through this. In order to make cost of the device of the present invention small, the fan used should use the thing generally marketed. That is, passing air by the wind pressure which the fan generally marketed generates needs to make honeycomb size easy fluid resistance. From the above viewpoint, a honeycomb size of 50 to 400 cells (number of the honeycomb on the rotor surface) per 6.4516 square centimeter (per square inch) is used. The length of the direction of a flute of a honeycomb (rotor cross direction) is set to 50 to 600 mm from a viewpoint of getting the performance which can remove simultaneously the amount of winds and carbon dioxide by a general-purpose fan, and moisture. The honeycomb base materials, such as glass fiber paper and ceramic textiles paper, is calcinated at 300°C to 600°C, preferably 400°C to 500°C, and were taken as the fibrous support. The support ratio of the Ce oxide adsorbent is preferably 20% - 70%, more preferably 40% - 60%, to the adsorption rotor which can remove carbon dioxide and moisture simultaneously, in terms of a ratio of bulk density (kg/m³). A particle diameter of 4 nm (maker catalog value) which does not affect the carbon dioxide adsorption characteristic of Ce oxide adsorbent easily, and functions as moisture adsorbent with silica sol as a binder was regarded as the minimum particle diameter. A particle diameter of 50 nm (maker catalog value) at which the powder omission (omission from an adsorption rotor) of Ce oxide adsorbent is not produced, is used as the maximum particle diameter. The support ratio of the silica sol to the adsorption rotor is preferably 5% - 25%, more preferably 10% - 20%, in terms of a ratio of bulk density (kg/m³), and the pH of the silica sol impregnating slurry is weakly acidic to weakly alkaline which is a stable region of the slurry.

In order to raise the dehumidification performance of adsorption rotor 2 in which carbon dioxide and moisture are simultaneously removable, in addition to Ce oxide adsorbent, moisture adsorbent, such as zeolite and silica gel, may be mixed. That is, in addition to Ce oxide adsorbent which adsorbs carbon dioxide and moisture simultaneously, moisture adsorbent, such as zeolite and silica gel, is mixed, and it supports on adsorption rotor 2.

The low dew point air which passed through the processing zone and to which carbon dioxide levels became low is supplied to a source's low humidity workroom etc.

After being mixed with the outdoor air, the air which passed through the purge zone is heated to a temperature required for the regeneration of adsorption rotor 2 which can remove carbon dioxide and moisture simultaneously with regeneration heater 3, and is sent to a regeneration zone.

The air which came out of the regeneration zone is emitted to the exterior of a dehumidification air conditioner as exhaust air EA. In order to improve performance which removes carbon dioxide and moisture simultaneously, part of the processing air after passing through the pre air cooler is branched and used as purge air, but it is good also as composition which introduces the outdoor air besides a direct device into a device, without branching processing air, and it makes into purging air. In order to reduce the consumption energy of regeneration heater 3, the exhaust air EA that has left the regeneration zone may be configured to exchange sensible heat with the outdoor air sent to the regeneration zone.

When the environment of low humidity is required, it is good also as composition which provides the dehumidification rotor which used zeolite and/or silica gel for the latter part (backside) of adsorption rotor 2 which can remove carbon dioxide and moisture simultaneously as adsorbent, that is divided into two zones, a processing zone and a regeneration zone, at least. By having such composition, it becomes possible to further dehumidify the air which passed adsorption rotor 2 which can remove carbon dioxide and moisture simultaneously.

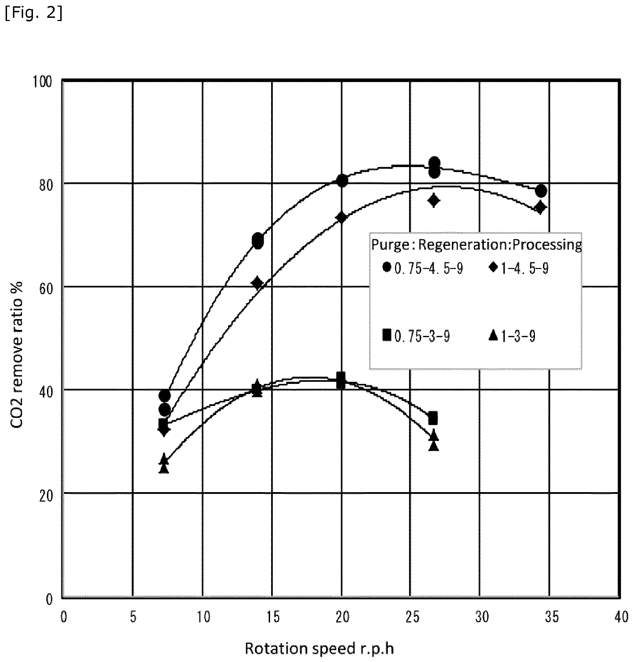

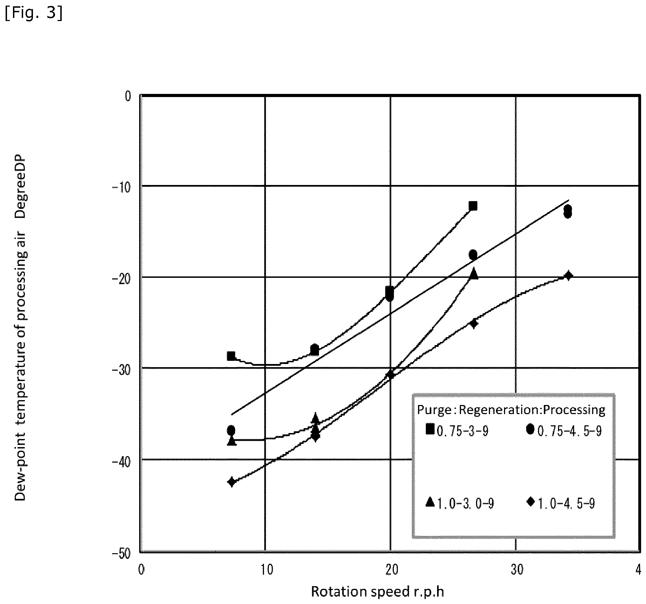

The graph of a carbon dioxide extraction ratio to the rotor number of rotations (rotor number of rotations in 1 hour: rph) at the time of changing into Figure 2 the amount ratio of winds which passes through a purge zone: regeneration zone : processing zone using adsorption rotor 2, which can remove carbon dioxide and moisture simultaneously, with a diameter of 320 mm and a width of 400 mm is shown. The processing inlet carbon dioxide concentration 500 ppm, the processing inlet air temperature 12°C, the processing inlet air absolute humidity 6 g/kg (DA), the processing inlet air velocity 2 m/s, the purge inlet air velocity 1.5 m/s to 2 m/s Test was conducted at a regeneration inlet carbon dioxide concentration of 500 ppm, a regeneration inlet air temperature of 140°C, a regeneration inlet air absolute humidity of 12 g/kg (DA), and a regeneration inlet air velocity of 2 m/s to 3 m/s. The graph of the relation of processing exit dew point temperature to the rotor number of rotations in the same conditions is shown in Figure 3.

From these graphs, although rotor number of rotations low as humidity performance is good, when balance with a carbon dioxide extraction ratio is seen, a purge zone, regeneration zone, processing zone is the amount ratio of winds of 1 : 4.5 : 9, and it understands rotor number of rotations that 20 rph is good.

In Example 1, since return air RA from sources, such as a low humidity workroom, is not used, the powerful organic-solvent gas of ignition quality is not emitted in a low humidity workroom, or gas harmful to a human body is not emitted. It is a dehumidification air conditioner which can be used also when gas which degrades adsorption rotor 2 which can remove carbon dioxide and moisture simultaneously is emitted in the source of supply of return air.

### [Industrial applicability]

The present invention can provide the dehumidification air conditioner which can make low the carbon dioxide levels in a low humidity workroom by using the adsorption rotor which can remove one set of carbon dioxide, and moisture simultaneously as above-mentioned.

### [Description of Notations]

1 Pre air cooler
2 Adsorption rotor which can remove carbon dioxide and moisture simultaneously
3 Regeneration heater

## Claims

1. An adsorption rotor for a dehumidifying air conditioner comprising a honeycomb adsorbent, which can carry out simultaneous removal of carbon dioxide and moisture, in which Ce oxide adsorbent and silica are supported by a fibrous support,
wherein the Ce oxide adsorbent is the powder adsorbent made of an oxide of Ce with an average secondary particle diameter of 0.5 µm - 20 µm, as measured with a scanning electron microscope, or laser diffraction and the diameter distribution measuring device of a dispersion type particle, wherein the honeycomb adsorbent comprises, as silica, a silica sol having an average particle diameter of 4 nm - 50 nm.

2. The adsorption rotor according to claim 1, wherein the honeycomb size is 50 to 400 cells per 6.4516 square centimeter (per square inch) and wherein the length of the direction of a flute of a honeycomb is 50 mm to 600 mm.

3. The adsorption rotor according to any one of claims 1 and 2, wherein the support ratio of the bulk density (kg/m³) of the Ce oxide adsorbent to the bulk density (kg/m³) of the honeycomb adsorbent is 20% - 70%, and the support ratio of the bulk density (kg/m³) silica sol to the bulk density (kg/m³) of the honeycomb adsorbent is 5% - 25%.

4. The adsorption rotor according to any one of claims 1 to 3, wherein the fibrous support is a fibrous support obtained from glass fibers and/or a living body solubility inorganic fiber.

5. The adsorption rotor according to any one of claims 1 to 4, wherein a moisture adsorbent is mixed and supported in addition to the Ce oxide adsorbent.

6. Dehumidifying air conditioner, exhausting air which passed through a regeneration zone of an adsorption rotor which can remove carbon dioxide and moisture simultaneously out of a device, **characterized in that** it has an adsorption rotor according to any one of claims 1 to 5 which can remove carbon dioxide and moisture simultaneously divided into at least three zones, a regeneration zone, a processing zone, and a purge zone, and carries out cooling dehumidification of the outdoor air in pre air cooler, branches a part of air which passed through said pre air cooler and sends it to a purge zone of the adsorption rotor which can remove said carbon dioxide and moisture simultaneously, and a part of the remainder is passed to the processing zone of the adsorption rotor which can remove the carbon dioxide and moisture simultaneously and is supplied as supply air, wherein air which mixed said air which passed through a purge zone of the adsorption rotor, which can remove carbon dioxide and moisture simultaneously, and the outdoor air is heated with a regeneration heater and sent to a regeneration zone, to remove said carbon dioxide and moisture simultaneously.

7. Dehumidifying air conditioner, exhausting air which passed through a regeneration zone of an adsorption rotor which can remove carbon dioxide and moisture simultaneously out of a device, **characterized in that** it has an adsorption rotor according to any one of claims 1 to 5 which can remove carbon dioxide and moisture simultaneously divided into at least three zones, a regeneration zone, a processing zone, and a purge zone, and carries out cooling dehumidification of the outdoor air in pre air cooler, wherein the air is passed to the processing zone of the adsorption rotor and supplied to the supply destination as supply air, and the outdoor air is sent to the purge zone of the adsorption rotor which can remove said carbon dioxide and moisture simultaneously, wherein air which mixed said air which passed through a purge zone of the adsorption rotor, which can remove carbon dioxide and moisture simultaneously, and the outdoor air is heated with a regeneration heater and sent to a regeneration zone, to remove said carbon dioxide and moisture simultaneously.

8. The dehumidifying air conditioner according to any of Claim 6 and Claim 7, **characterized in** carrying out sensible heat exchange of air which passed through said regeneration zone, and the outdoor air sent to said regeneration heater.

9. The dehumidifying air conditioner according to any of Claim 6 to Claim 8, **characterized in** providing a dehumidification rotor in the latter part of an adsorption rotor which can remove said carbon dioxide and moisture simultaneously.

## Patentansprüche

1. Adsorptionsrotor für eine entfeuchtende Klimaanlage, umfassend ein wabenförmiges Adsorptionsmittel, das eine gleichzeitige Entfernung von Kohlendioxid und Feuchtigkeit durchführen kann, in dem Ce-Oxid-Adsorptionsmittel und Siliciumdioxid durch einen faserigen Träger getragen werden,
wobei das Ce-Oxid-Adsorptionsmittel das Pulveradsorptionsmittel ist, das aus einem Oxid von Ce mit einem durchschnittlichen sekundären Teilchendurchmesser von 0,5 µm - 20 µm hergestellt ist, wie mit einem Rasterelektronenmikroskop oder Laserbeugung und dem Durchmesserverteilungsmessgerät eines Teilchens vom Dispersionstyp gemessen,
wobei das wabenförmige Adsorptionsmittel als Siliciumdioxid ein Siliciumdioxidsol mit einem durchschnittlichen Teilchendurchmesser von 4 nm - 50 nm umfasst.

2. Adsorptionsrotor nach Anspruch 1, wobei die Wabengröße 50 bis 400 Zellen pro 6,4516 Quadratzentimeter (pro Quadratzoll) beträgt und wobei die Länge der Richtung einer Rille einer Wabe 50 mm bis 600 mm beträgt.

3. Adsorptionsrotor nach einem der Ansprüche 1 und 2, wobei das Trageverhältnis der Schüttdichte (kg/m³) des Ce-Oxid-Adsorptionsmittels zur Schüttdichte (kg/m³) des wabenförmigen Adsorptionsmittels 20% - 70% beträgt und das Trageverhältnis der Schüttdichte (kg/m³) des Siliciumdioxidsols zur Schüttdichte (kg/m³) des wabenförmigen Adsorptionsmittels 5% - 25% beträgt.

4. Adsorptionsrotor nach einem der Ansprüche 1 bis 3, wobei der faserige Träger ein faseriger Träger aus Glasfasern und/oder einer anorganischen Faser mit Lebendkörperlöslichkeit ist.

5. Adsorptionsrotor nach einem der Ansprüche 1 bis 4, wobei zusätzlich zum Ce-Oxid-Adsorptionsmittel ein Feuchtigkeitsadsorptionsmittel beigemischt ist und getragen wird.

6. Entfeuchtungsklimaanlage, die Luft, die eine Regenerationszone eines Adsorptionsrotors, der Kohlendioxid und Feuchtigkeit gleichzeitig entfernen kann, durchlaufen hat, aus einer Vorrichtung abführt, **dadurch gekennzeichnet, dass** es einen Adsorptionsrotor nach einem der Ansprüche 1 bis 5, der Kohlendioxid und Feuchtigkeit gleichzeitig entfernen kann, aufweist, der in mindestens drei Zonen, eine Regenerationszone, eine Verarbeitungszone und eine Spülzone unterteilt ist und eine kühlende Entfeuchtung der Außenluft in einem Vorluftkühler durchführt, einen Teil der Luft, die durch den Vorluftkühler hindurchgegangen ist, abzweigt und sie zu einer Spülzone des Adsorptionsrotors schickt, der das Kohlendioxid und die Feuchtigkeit gleichzeitig entfernen kann, und einen Teil des Rests zu der Verarbeitungszone des Adsorptionsrotors schickt, der das Kohlendioxid und die Feuchtigkeit gleichzeitig entfernen kann, und als Zuluft zugeführt wird, wobei Luft, die die Luft, die durch eine Spülzone des Adsorptionsrotors hindurchgegangen ist, der Kohlendioxid und die Feuchtigkeit gleichzeitig entfernen kann, und die Außenluft gemischt wird, mit einem Regenerationserhitzer erwärmt und zu einer Regenerationszone geschickt wird, um das Kohlendioxid und die Feuchtigkeit gleichzeitig zu entfernen.

7. Entfeuchtungsklimaanlage, die Luft, die eine Regenerationszone eines Adsorptionsrotors, der Kohlendioxid und Feuchtigkeit gleichzeitig entfernen kann, durchlaufen hat, aus einer Vorrichtung abführt, **dadurch gekennzeichnet, dass** sie einen Adsorptionsrotor nach einem der Ansprüche 1 bis 5, der Kohlendioxid und Feuchtigkeit gleichzeitig entfernen kann, aufweist, der in mindestens drei Zonen, eine Regenerationszone, eine Verarbeitungszone und eine Spülzone unterteilt ist, und eine kühlende Entfeuchtung der Außenluft in einem Vorluftkühler durchführt, wobei die Luft in die Verarbeitungszone des Adsorptionsrotors geschickt wird und dem Versorgungsziel als Versorgungsluft zugeführt wird, und die Außenluft in die Spülzone des Adsorptionsrotors geschickt wird, die das Kohlendioxid und die Feuchtigkeit gleichzeitig entfernen kann, wobei Luft, die die Luft, die durch eine Spülzone des Adsorptionsrotors hindurchgegangen ist, der Kohlendioxid und die Feuchtigkeit gleichzeitig entfernen kann, und die Außenluft gemischt wird, mit einem Regenerationserhitzer erwärmt und zu einer Regenerationszone geschickt wird, um das Kohlendioxid und die Feuchtigkeit gleichzeitig zu entfernen

8. Entfeuchtungsklimaanlage nach einem der Ansprüche 6 und 7, **dadurch gekennzeichnet, dass** ein fühlbarer Wärmeaustausch der Luft, die durch die Regenerationszone hindurchgegangen ist, und der Außenluft, die zu dem Regenerationserhitzer geschickt wird, durchgeführt wird.

9. Entfeuchtungsklimaanlage nach einem der Ansprüche 6 bis 8, **dadurch gekennzeichnet, dass** ein Entfeuchtungsrotor im letzten Teil eines Adsorptionsrotors bereitgestellt ist, der das Kohlendioxid und die Feuchtigkeit gleichzeitig entfernen kann.

## Revendications

1. Rotor d'adsorption pour climatiseur déshumidificateur comprenant un adsorbant en nid d'abeille, qui peut effectuer une élimination simultanée de dioxyde de carbone et d'humidité, dans lequel un adsorbant oxyde de Ce et de la silice sont supportés par un support fibreux,
dans lequel l'adsorbant oxyde de Ce est un adsorbant en poudre fait d'un oxyde de Ce ayant une granulométrie secondaire moyenne de 0,5 µm à 20 µm, telle que mesurée par un microscope électronique à balayage, ou une diffraction laser et un dispositif de mesure de distribution de diamètre de particules du type en dispersion,
dans lequel l'adsorbant en nid d'abeille comprend, en tant que silice, un sol de silice ayant une granulométrie moyenne de 4 nm à 50 nm.

2. Rotor d'adsorption selon la revendication 1, dans lequel la taille du nid d'abeille est de 50 à 400 cellules pour 6,4516 centimètres carrés (par pouce carré) et dans lequel la longueur de la direction d'une cannelure du nid d'abeille est de 50 mm à 600 mm.

3. Rotor d'adsorption selon l'une quelconque des revendications 1 et 2, dans lequel le rapport de support de la masse volumique apparente (kg/m³) de l'adsorbant oxyde de Ce à la masse volumique apparente (kg/m³) de l'adsorbant en nid d'abeille est de 20 % à 70 %, et le rapport de support de la masse volumique apparente (kg/m³) du sol de silice à la masse volumique apparente (kg/m³) de l'adsorbant en nid d'abeille est de 5 % à 25 %.

4. Rotor d'adsorption selon l'une quelconque des revendications 1 à 3, dans lequel le support fibreux est un support fibreux obtenu à partir de fibres de verre et/ou d'une fibre inorganique soluble dans un corps vivant.

5. Rotor d'adsorption selon l'une quelconque des revendications 1 à 4, dans lequel un adsorbant d'humidité est mélangé et supporté en plus de l'adsorbant oxyde de Ce.

6. Climatiseur déshumidificateur, évacuant de l'air qui a traversé une zone de régénération d'un rotor d'adsorption qui peut éliminer simultanément du dioxyde de carbone et de l'humidité hors d'un dispositif, **caractérisé en ce qu'**il a un rotor d'adsorption selon l'une quelconque des revendications 1 à 5 qui peut éliminer simultanément du dioxyde de carbone et de l'humidité divisé en au moins trois zones, une zone de régénération, une zone de traitement, et une zone de purge, et réalise une déshumidification par refroidissement de l'air extérieur dans un pré-refroidisseur d'air, fait bifurquer une partie de l'air qui a traversé ledit pré-refroidisseur d'air et l'envoie vers une zone de purge du rotor d'adsorption qui peut éliminer simultanément lesdits dioxyde de carbone et humidité, et une partie du reste est envoyée vers la zone de traitement du rotor d'adsorption qui peut éliminer simultanément le dioxyde de carbone et l'humidité et est délivrée en tant qu'air d'alimentation, dans lequel l'air qui a mélangé ledit air qui a traversé une zone de purge du rotor d'adsorption, qui peut éliminer simultanément du dioxyde de carbone et de l'humidité, et l'air extérieur, est chauffé avec un dispositif chauffant de régénération et envoyé vers une zone de régénération, pour que lesdits dioxyde de carbone et humidité soient éliminés simultanément.

7. Climatiseur déshumidificateur, évacuant de l'air qui a traversé une zone de régénération d'un rotor d'adsorption qui peut éliminer simultanément du dioxyde de carbone et de l'humidité hors d'un dispositif, **caractérisé en ce qu'**il a un rotor d'adsorption selon l'une quelconque des revendications 1 à 5 qui peut éliminer simultanément du dioxyde de carbone et de l'humidité divisé en au moins trois zones, une zone de régénération, une zone de traitement, et une zone de purge, et réalise une déshumidification par refroidissement de l'air extérieur dans un pré-refroidisseur d'air, dans lequel l'air passe vers la zone de traitement du rotor d'adsorption et est délivré à la destination de délivrance en tant qu'air d'alimentation, et l'air extérieur est envoyé vers la zone de purge du rotor d'adsorption qui peut éliminer simultanément lesdits dioxyde de carbone et humidité, dans lequel l'air qui a mélangé ledit air qui a traversé une zone de purge du rotor d'adsorption, qui peut éliminer simultanément du dioxyde de carbone et de l'humidité, et l'air extérieur, est chauffé avec un dispositif chauffant de régénération et envoyé vers une zone de régénération, pour que lesdits dioxyde de carbone et humidité soient éliminés simultanément.

8. Climatiseur déshumidificateur selon l'une quelconque des revendications 6 et 7, **caractérisé par** la mise en œuvre d'un échange de chaleur sensible de l'air qui a traversé ladite zone de régénération, et de l'air extérieur envoyé dans ledit dispositif chauffant de régénération.

9. Climatiseur déshumidificateur selon l'une quelconque des revendications 6 à 8, **caractérisé en ce qu'**il apporte un rotor de déshumidification dans la dernière partie d'un rotor d'adsorption qui peut éliminer simultanément lesdits dioxyde de carbone et humidité.
